# EUROPÄISCHE PATENTSCHRIFT

(11) **EP 0 661 321 B1**
(45) Veröffentlichungstag und Bekanntmachung des Hinweises auf die Patenterteilung: **30.07.1997**
(21) Anmeldenummer: 94120194.9
(22) Anmeldetag: 20.12.1994
(51) Int. Cl.: C08G 18/67, C08G 18/08, C08G 18/12, C08G 18/80, C09D 175/04, C08G 18/66

(54) **Wässrige Bindemitteldispersion für physikalisch trocknende Überzugsmittel und deren Verwendung**
Aqueous binder dispersion for physically drying coatings and its use
Dispersion de liant aqueux pour revêtements à séchage physique et son utilisation

(30) Priorität: 23.12.1993 DE 4344063
(43) Veröffentlichungstag der Anmeldung: 05.07.1995
(73) Patentinhaber: Herberts Gesellschaft mit beschränkter Haftung, 42285 Wuppertal (DE)
(72) Erfinder: Brock, Thomas, Dr., D-50354 Hürth (DE); Wandelmaier, Klaus, Dr., D-42111 Wuppertal (DE)
(74) Vertreter: Türk, Gille, Hrabal, Leifert

(56) Entgegenhaltungen:
- EP-A- 0 033 899
- EP-A- 0 249 222
- EP-A- 0 473 169
- EP-A- 0 480 251
- EP-A- 0 522 419
- CHEMICAL ABSTRACTS, vol. 110, no. 10, 6. März 1989, Columbus, Ohio, US; abstract no. 76179a, P.K.H.LAM ET AL. 'synthesis of unsaturated polyurethanes and their characterization' Seite 7 ;

## Beschreibung

Die Erfindung betrifft wäßrige Bindemitteldispersionen, sowie diese enthaltende physikalisch trocknende Überzugsmittel auf wäßriger Basis, die insbesondere für uni- und metallicfarbene Basisschichten geeignet sind.

In Industrie und Gewerbe besteht ein Bedürfnis nach physikalisch trocknenden Überzugsmitteln, die insbesondere zur Reparaturlackierung von verschiedenen Substraten, wie Metallgegenstände, insbesondere auf dem Kraftfahrzeugsektor oder zur Lackierung von Maschinen geeignet sind. Für derartige Zwecke sind Überzugsmittel erforderlich, die bei Raumtemperatur oder bei geringfügigem Erwärmen, beispielsweise auf bis zu 60°C, trocken bzw. härten.

Derartige physikalisch trocknende Überzugsmittel, die beispielsweise für Reparaturlackierungen von Kraftfahrzeugen geeignet sind, sind bekannt, beispielsweise aus der DE-A-41 15 015 und der DE-A-41 15 042. Diese bekannten Überzugsmittel auf der Basis von Polyurethanbindemitteln zeigen jedoch im Mehrschichtaufbau noch Nachteile im Vergleich zu konventionellen lösemittelhaltigen Basislacken. Insbesondere wird eine nur ungenügende Härte des Gesamtaufbaus erreicht.

Weiterhin werden in der DE-A-41 22 265 Polyurethan-Dispersionen beschrieben, die nach Überführung in die wäßrige Phase unter anderem zur Herstellung von Metallic- und Unibasislacken geeignet sind. Die Polyurethandispersionen werden hergestellt durch radikalisch initiierte Polymerisation von Polyurethanmakromonomeren mit lateralen Vinylgruppen. Nachteil dieser Überzugsmittel ist vor allem eine zu geringe Wasserfestigkeit, die sich insbesondere unter den Bedingungen der Fahrzeugreparaturlackierung zeigt.

In der DE-A-39 36 794 werden Polyurethanharnstoffe sowie ihre Verwendung als Bindemittel in wäßrigen Metallic-Basislacken beschrieben. Das Bindemittel enthält mindestens 200 Milliäquivalente pro 100 g Feststoff an chemisch eingebauten Carbonatgruppierungen. Basislacke auf dieser Grundlage zeigen jedoch im Vergleich zu Basislacken auf Lösemittelbasis eine mangelnde Härte im Gesamtaufbau, insbesondere beim Überlackieren mit konventionellen Klarlacken.

In der noch nicht veröffentlichten deutschen Patentanmeldung P 43 23 896 werden weitere wäßrige hydrolyse- und lagerstabile Polyurethandispersionen beschrieben, die erhalten werden durch Kettenverlängerung eines Polyurethanprepolymeren mit Polyisocyanat. Sie sind in der Mehrschichtlackierung einsetzbar für Decklack- und Basisschichten. Unter den speziellen Bedingungen der Fahrzeugreparaturlackierung bzw. ähnlicher an die Bedingung niedriger Härtungstemperaturen gebundener Anwendungen werden mit den beschriebenen Polyurethandispersionen ungenügende Wasserfestigkeiten erzielt.

Aufgabe der Erfindung ist die Bereitstellung von Bindemitteln für physikalisch trocknende Überzugsmittel auf wäßriger Basis, welche als Basislack im Mehrschichtaufbau die Eigenschaften konventioneller Basislacke, insbesondere bezüglich Härte und Wasserfestigkeit, erreichen.

Diese Aufgabe wird gelöst durch eine wäßrige Dispersion eines für Überzugsmittel geeigneten Bindemittels, enthaltend ein Gemisch aus
A) 45 bis 95 Gew.-% eines oder mehrerer Polyurethane, erhältlich durch radikalisch initiierte Polymerisation von Polyurethan-Makromonomeren mit einem Gehalt an Carboxyl-, Phosphon- und/oder Sulfonsäuregruppen und lateralen Vinylgruppen sowie gegebenenfalls terminalen Vinyl-, Hydroxy-, Urethan-, Thiourethan- und/oder Harnstoffgruppen in Gegenwart von einem oder mehreren mit dem Polyurethanmakromonomer copolymerisierbaren ungesättigten Monomeren, in Form einer wäßrigen Dispersion und
B) 5 bis 55 Gew.-% eines oder mehrerer harnstoffgruppenfreier und carbonatgruppenfreier ionische Gruppen enthaltender Polyurethanharze mit einem Zahlenmittel der Molmasse (Mn) von 10000 bis 300000 und einer Säurezahl von 5 bis 50 in Form einer wäßrigen Dispersion, erhältlich durch Bereitung eines OH-Gruppen enthaltenden Polyurethan-Prepolymeren mit einer OH-Zahl von 5 bis 75 und einem Zahlenmittel der Molmasse (Mn) von 5000 bis 50000, durch Umsetzung in organischem Medium von
   a) einer oder mehreren mit Isocyanat reaktiven Verbindung mit einer Säurezahl von 0 bis 10, in Form von
      a1) 70 bis 100 Gew.-% eines oder mehrerer Polyesterpolyole und/oder Polyetherpolyole, insbesondere Polyesterdiole, Polyetherdiole und/oder Polycarbonatdiole, einem Molekulargewicht von 500 bis 6000, zusammen mit
      a2) 30 bis 0 Gew.-% einer oder mehrerer von a1) unterschiedlicher Verbindungen mit mindestens zwei mit Isocyanat reaktiven Gruppen, mit einem Molekulargewicht von 60 bis 400, mit
   b) einem oder mehreren, freie Isocyanatgruppen enthaltenden Reaktionsprodukten aus
      b1) mindestens einer Verbindung mit zwei mit Isocyanaten reaktiven Gruppen und mindestens einer anionischen oder zur Anionenbildung befähigten Gruppe und
      b2) einem oder mehreren organischen Diisocyanaten
in einem derartigen Mengenverhältnis, daß das molare Verhältnis der mit Isocyanat reaktiven Gruppen von b1) zu den Isocyanatgruppen von b2) 1 : 1,5 bis 1 : 2,5 beträgt, wobei das Reaktionsprodukt b) in Anwesenheit der Komponente a) hergestellt werden kann, wobei die Komponente b) in einer derartigen Menge eingesetzt wird, daß die fertigen Polyurethanharze die gewünschte Säurezahl aufweisen, sowie mit
c) einem oder mehreren Polyisocyanaten mit mindestens zwei freien Isocyanatgruppen pro Molekül, in einer derartigen Menge, daß das molare Verhältnis der OH-Gruppen der Komponente a) zu den NCO-Gruppen der Komponenten b) und c) 1,01 : 1 bis 3 : 1 beträgt, worauf das aus a), b) und c) erhaltende Prepolymere vor oder nach der teilweisen oder vollständigen Neutralisation vorhandener in ionische Gruppen überführbarer Gruppen in dem organischen Medium oder nach Überführung in die Wasserphase einer Kettenverlängerung unterzogen wird durch Umsetzung mit
d) einem oder mehreren polyfunktionellen Isocyanaten mit einer Funktionalität an freien NCO-Gruppen von mindestens 1,8, in derartigen Anteilen, daß die fertigen Polyurethanharze das gewünschte Zahlenmittel der Molmasse aufweisen, wobei sich die Gew.-% der Komponenten A) und B) jeweils auf den Harzfestkörper beziehen.

Einen weiteren Gegenstand der Erfindung bilden wäßrige Überzugsmittel, enthaltend:
- 8 bis 20 Gew.-%, bezogen auf den Harzfestkörper, einer oder mehrerer Dispersionen, wie vorstehend beschrieben,
- 50 bis 90 Gew.-% Wasser,
- 0 bis 20 Gew.-% eines oder mehrerer organischer Lösemittel,
- 0,1 bis 20 Gew.-% eines oder mehrerer Effektpigmente und/oder farbgebender Pigmente, und/oder Füllstoffe,
- Neutralisationsmittel zur Erzielung eines Neutralisationsgrades der neutralisierbaren Gruppen des Bindemittels von 40 - 120 %, sowie gegebenenfalls übliche Additive und Hilfsstoffe.

Bei der Komponente A) des erfindungsgemäß eingesetzten Bindemittels handelt es sich um ein oder mehrere Polyurethane, hergestellt durch radikalisch initiierte Polymerisation von Polyurethanmakromonomeren mit einem Gehalt an Carboxyl-, Phosphon- und/oder Sulfonsäuregruppen und lateralen Vinylgruppen sowie gegebenenfalls terminalen Vinylgruppen, Hydroxyl-, Urethan-, Thiourethan- und/oder Harnstoffgruppen in einem als Lösemittel dienenden, mit dem Polyurethanmakromonomer copolymerisierbaren ungesättigten Monomeren, gegebenenfalls in Gegenwart davon unterschiedlicher weiterer copolymerisierbarer ungesättigter Monomerer oder durch radikalisch initiierte Polymerisation der Polyurethan-Makromonomeren in einem Gemisch aus Wasser und einem gegenüber Isocyanatgruppen inerten organischen Lösemittel, in Anwesenheit von mit den Polyurethan-Makromonomeren copolymerisierbaren ungesättigten Monomeren, und gegebenenfalls Abdestillation des organischen Lösemittels vor oder nach der radikalischen Polymerisation. Die Polyurethane liegen in Form wäßriger Dispersionen vor.

Die Polyurethandispersionen (Komponente A) können auf verschiedene Weise hergestellt werden. Ein Weg besteht darin, daß ein Polyadditionsprodukt (Polyurethan-Makromonomeres) hergestellt wird durch Polyaddition von Polyhydroxy-Verbindungen aus der Gruppe Polyhydroxy-polyether, Polyhydroxy-polyester oder Polyhydroxy-polycarbonate, weiterhin Polyhydroxycarbonsäuren, Dihydroxyphosphonsäuren und/oder Polyhydroxysulfonsäuren, sowie Polyisocyanaten und einem mindestens zwei Hydroxy- sowie mindestens eine Vinylgruppe enthaltenden Monomeren. Die Mengenverhältnisse der Reaktanten, insbesondere an Polyisocyanat können dabei so gewählt werden, daß beispielsweise ein Makromonomer mit terminalen Hydroxylgruppen entsteht. Dieses Makromonomer, das außerdem Carboxyl- oder Sulfonsäuregruppen und laterale Vinylgruppen enthält, wird nach Überführung in eine wäßrige Dispersion über die Vinylgruppen mit copolymerisierbaren ungesättigten Monomeren und radikalbildenden Initiatoren polymerisiert unter Bildung der Polyurethan-Dispersion, wobei in diesem Fall das Polyurethan noch Hydroxylgruppen trägt.

Ein zweiter Weg besteht darin, daß im Gegensatz zu der zuvor beschriebenen Variante das Mengenverhältnis an Polyisocyant so gewählt wird, daß ein Makromonomer mit terminalen Isocyanatgruppen entsteht.

Daneben enthält dieses Makromonomer noch Carboxyl-, Phosphonsäure und/oder Sulfonsäuregruppen, sowie laterale Vinylgruppen. Die freien Isocyanatgruppen dieses Makromonomeres werden dann mit primären oder sekundären Aminen oder Thioalkoholen unter Bildung von Harnstoff-, Urethan-oder Thiourethangruppen umgesetzt. Das so modifizierte Makromonomer wird dann ebenfalls über die Vinylgruppen mit copolymerisierbaren ungesättigten Monomeren und radikalbildenden Initiatoren polymerisiert.

Ein dritter Weg besteht darin, daß, wie bei der zweiten Verfahrensvariante, ein Polyadditionsprodukt hergestellt wird durch Reaktion von Polyhydroxy-Verbindungen aus der Gruppe Polyhydroxy-polyether, Polyhydroxy-polyester oder Polyhydroxy-polycarbonate sowie Polyhydroxycarbonsäuren, Dihydroxyphosphonsäuren und/oder Polyhydroxysulfonsäuren, und Polyisocyanaten und zusätzlich mindestens einem Monomeren, das mindestens eine Vinylgruppe und mindestens zwei Hydroxygruppen enthält. Auch hier wird ein Überschuß von Polyisocyanat genommen, so daß das entstehende Makromonomer laterale Vinylgruppen sowie Carboxyl-, Phosphonsäure- und/oder Sulfonsäuregruppen, sowie terminale Isocyanatgruppen besitzt. Dieses Makromonomer wird dann mit mindestens einem Monomeren umgesetzt, das außer einer Vinylgruppe noch eine Gruppe enthält, die mit Isocyanatgruppen reagiert, wie etwa die Hydroxyl-, Amino- oder Mercaptogruppe. Diese Monomeren können allein verwendet werden, es ist aber auch möglich, diese Monomeren im Gemisch mit primären oder sekundären Aminen, Alkoholen oder Thioalkoholen einzusetzen. Auf diese Weise erhält man ein Makromonomer, das laterale Vinylgruppen sowie terminale Vinylgruppen enthält. Dieses Makromonomer wird dann in der letzten Stufe ebenfalls über die Vinylgruppen mit copolymerisierbaren ungesättigten Monomeren und radikalbildenden Initiatoren polymerisiert.

Eine vierte Verfahrensvariante besteht darin, daß das Monomer, welches die Carboxyl-, Phosphonsäure- und/oder Sulfonsäuregruppe trägt, erst in das zuvor gebildete Makromonomer eingebaut wird. Bei dieser Verfahrensvariante wird zunächst ein Polyadditionsprodukt gebildet aus Polyhydroxy-polyethern, Polyhydroxy-polyestern oder Polyhydroxy-carbonaten, Polyisocyanaten und Monomeren, die sowohl mindestens eine Vinylgruppe als auch mindestens zwei Hydroxylgruppen enthalten. Auch hier wird ein molarer Überschuß an Polyisocyanat genommen, so daß das entstehende Makromonomer terminale Isocyanatgruppen enthält. Daneben enthält dieses Makromonomer dann noch laterale Vinylgruppen.

Zum anderen kann das gebildete Zwischenprodukt in der Kette verlängert werden, indem die Isocyanatgruppen dieses Polyadditionsprodukts beispielsweise mit Diamincarbonsäuren oder Diaminsulfonsäuren umgesetzt werden. Auch hier erfolgt abschließend dann eine radikalisch initiierte Polymerisation der Vinylgruppen mit copolymerisierbaren ungesättigten Monomeren.

Beispiele für die Polyhydroxyl-polyether zur Herstellung der Polyurethanmakromonomeren sind Verbindungen der allgemeinen Formel

H - [ - O - (CHR)ₙ -]ₘ OH

in der
- R: Wasserstoff oder ein niedriger Alkylrest (z.B. mit C₁ - ₆ oder C₁ - ₄), gegebenenfalls mit verschiedenen Substituenten, ist
- n: eine Zahl von 2 bis 6 und
- m: eine Zahl von 10 bis 120 ist.

Spezielle Beispiele sind Poly(oxytetramethylen)glykole, Poly(oxyethylen)glykole und Poly(oxypropylen)glykole. Die bevorzugten Polyhydroxy-polyether sind Poly(oxypropylen)glykole mit einem Molekulargewicht im Bereich von 400 bis 5000.

Beispiele für verwendbare Polyhydroxy-polyester sind solche, die hergestellt werden durch Veresterung von organischen Polycarbonsäuren oder ihren Anhydriden mit organischen Polyolen. Die Polycarbonsäuren und die Polyole können z.B. aliphatische oder aromatische Polycarbonsäuren und Polyole sein.

Die zur Herstellung verwendeten Polyole schließen beispielsweise Alkylenglykole wie Ethylenglykol, Butylenglykol, Neopentylglykol und andere Glykole wie Diethylolocyclohexan sowie Trishydroxyalkylalkane, wie z.B. Trimethylolpropan und Tetrakishydroxyalkylalkane, wie z.B. Pentaerythrit ein.

Die Säurekomponente des Polyesters besteht bevorzugt in erster Linie aus niedermolekularen Polycarbonsäuren, z.B. Dicarbonsäuren, oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Bernsteinsäure, Adipinsäure, Azelainsäure, Sebazinsäure, Maleinsäure, Glutarsäure, Hexachlorneptandicarbonsäure, Tetrachlorphthalsäure, Trimellitsäure und Pyromellitsäure. Anstelle dieser Säuren können auch ihre Anhydride, soweit diese existieren, verwendet werden. Als Polycarbonsäuren lassen sich beispielsweise auch Dimer- und Trimerfettsäuren einsetzen.

Als Ausgangsverbindung kommen weiterin Polycarbonatpolyole bzw. Polycarbonatdiole in Frage, die beispielsweise der allgemeinen Formel 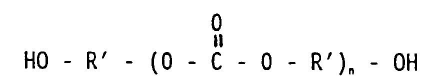 entsprechen, worin die Reste R', die gleich oder verschieden sein können, einen Alkylenrest bedeuten. Diese OH-funktionellen Polycarbonate lassen sich durch Umsetzung von Polyolen wie Propandiol-1,3, Butandiol-1,6, Diethylenglykol, Triethylenglykol, 1,4-Bishydroxymethylcyclohexan, 2,2-(Bis(4-hydroxycyclohexyl)propan, Neopentylglykol, Trimethylolpropan, Pentaerythrit, mit Dicarbonaten, wie Dimethyl-, Diethyl- oder Diphenylcarbonat, oder mit Phosgen herstellen. Gemische solcher Polyole können ebenfalls eingesetzt werden.

Es ist von besonderer Bedeutung für die Polyurethan-Dispersionen, daß die Makromonomeren, die zu diesen Dispersionen führen, laterale Vinylgruppen sowie gegebenenfalls auch terminale Vinylgruppen enthalten. Der Begriff terminale Vinylgruppen soll solche Vinylgruppen bezeichnen, die am Anfang oder Ender der Polymerkette hängen, laterale Vinylgruppen sind dagegen solche, die nicht am Anfang oder Ende der Polymerkette hängen, sondern dazwischen eingebaut sind.

Die lateralen Vinylgruppen in den Polyurethan-Dispersionen erhält man durch den Einbau von solchen Monomeren in das Makromonomer, die mindestens zwei Hydroxylgruppen und mindestens eine Vinylgruppe ausweisen. Beispiele hierfür sind Trimethylolpropan (TMP)-Derivate wie z.B. TMP-Monoallylether(2-Propenyloxy-2-hydroxymethylpropanol), TMP-Mono(meth)acrylat(2-(Meth)acryloyloxy-2-hydroxymethylpropanol; Glycerinmono(meth)acrylat; Addukte von alpha,beta-ungesättigten Carbonsäuren, wie (Meth)acrylsäure, an Diepoxide, z.B. Bisphenol-A-diglycidether, Hexandioldiglycidylether; Addukte von Dicarbonsäuren, wie z.B. Adipinsäure, Terephthalsäure oder dergleichen an (Meth)acrylsäureglycidylester; Monovinylether von Polyolen.

Die Herstellung der Polyurethanmakromonomere kann nach den üblichen und in der Urethan-Chemie bekannten Methoden erfolgen. Hierbei können beispielsweise Katalysatoren eingesetzt werden, wie z.B. tertiäre Amine, wie z.B. Triethylamin, Dimethylbenzylamin, Diazabicyclooctan sowie Dialkylkzinn (IV)-Verbindungen, wie z.B. Dibutylzinndilaurat, Dibutylzinndichlorid, Dimethylzinndilaurat. Die Reaktion findet insbesondere in Anwesenheit eines Lösemittels oder in Anwesenheit eines sogenannten Reaktivverdünners statt. Als Lösemittel kommen solche in Frage, die später durch Destillation entfernt werden können, beispielsweise Methylethylketon, Methylisobutylketon, Aceton, Tetrahydrofuran, Toluol, Xylol. Diese Lösemittel können ganz oder teilweise nach der Herstellung der Polyurethan-Makromonomeren oder nach der radikalischen Polymerisation abdestilliert werden. Statt dessen oder daneben kann man auch wasserverdünnbare hochsiedende Lösemittel, z.B. N-Methylpyrrolidon einsetzen, die dann in der Dispersion verbleiben. Als Reaktivverdünner können beispielsweise alpha,beta-ungesättigte Monomere verwendet werden, wie sie in der Endstufe mit den Vinylgruppen enthaltenden Makromonomeren copolymerisiert werden. Beispiele für solche Monomere, die auch als Reaktivverdünner eingesetzt werden können, sind alpha,beta-ungesättigte Vinylmonomere wie Alkylacrylate, Alkylmethacrylate und Alkylcrotonate mit 1 bis 20 Kohlenstoffatomen im Alkylrest, Di-, Tri- und Tetracrylate, -methacrylate, -crotonate von Glykolen, tri- und tetrafunktionelle Alkoholen, substituierte und unsubstituierte Acryl- und Methacrylamide, Vinylether, alpha,beta-ungesättigte Aldehyde und Ketone, Vinylalkylketone mit 1 bis 20 Kohlenstoffatomen im Alkylrest, Vinylether, Vinylester, Diester von alpha,beta-ungesättigten Dicarbonsäuren, Styrol, Styrolderivate, wie z.B. alpha-Methylstyrol.

Die so erhaltenen Makromonomeren werden dann neutralisiert, falls die sauren Gruppen in den Monomeren, die solche Gruppen tragen, nicht bereits von vornherein in neutralisierter Form eingesetzt wurden.

Die Neutralisation erfolgt beispielsweise mit wäßrigen Lösungen von Alkalihydroxiden oder mit Aminen, z.B. mit Trimethylamin, Triethylamin, Dimethylanilin, Diethylanilin, Triphenylamin, Dimethylethanolamin, Aminomethylpropanol, Dimethylisopropanolamin oder mit Ammoniak. Außerdem kann die Neutralisation auch mit Mischungen aus Aminen und Ammoniak vorgenommen werden.

Zur Herstellung der als Komponente A) eingesetzten Polyurethan-Dispersion werden die erhaltenen Makromonomeren, die Vinylgruppen enthalten, durch Zugabe von Wasser in eine wäßrige Dispersion überführt und nach an sich bekannten Methoden durch radikalisch initiierte Polymerisation polymerisiert. Bei dieser Polymerisation werden, falls nicht von vornherein als sogenannte Reaktivverdünner vorhanden, Monomere der Art, wie zuvor als Reaktivverdünner beschrieben, zugegeben, die dann in das Polyurethan mit einpolymerisiert werden.

Die so erhaltenen Polyurethane besitzen ein zahlenmittleres Molekulargewicht (Mn) von 30000 bis 500000, bevorzugt von 50000 bis 250000. Der Anteil an in das Polyurethan-Makromonomer einzupolymerisierenden ungesättigten Monomeren beträgt bevorzugt größer/gleich 5 Gew.-%, besonders bevorzugt größer/gleich 15 Gew.-%, bezogen auf das Gewicht des fertigen Gesamtharzes.

Die Säurezahlen der Polyurethan-Dispersionen der Komponente A) liegen im Bereich von 5 bis 80 mg KOH/g, bevorzugt bei 10 bis 40 mg KOH/g.

Derartige Polyurethan-Dispersionen und ihre Herstellung sind beispielsweise beschrieben in DE-A-41 22 265.

Bei der Herstellung der erfindungsgemäßen Bindemittelkomponente B) werden als Komponente a1) bevorzugt lineare Polyole mit endständigen OH-Gruppen verwendet. Es können beispielsweise Polyetherpolyole der allgemeinen Formel I eingesetzt werden.

H - [ - O - (CHR²)ₙ -]ₘ OH (I)

mit
- R² =: Wasserstoff oder ein niedriger Alkylrest (z.B. mit 1 bis 6 oder 1 bis 4 C-Atomen), gegebenenfalls mit einem oder mehreren Substituenten,
- n =: 2 bis 6, bevorzugt 3 bis 4 und
- m =: mindestens 5, z.B. 5 bis 50.

Beispiele sind Poly(oxytetramethylen)glykole, Poly(oxyethylen)glykole und Poly(oxypropylen)glykole.

Vorzugsweise werden solche Polyetherpolyole mit einem Molekulargewicht im Bereich von 500 und 3000 verwendet, die ohne Mitverwendung von Ethylenoxid, d.h. insbesondere unter ausschließlicher Verwendung von Propylenoxid oder Tetrahydrofuran herstellbar sind. Die OH-Zahl beträgt bevorzugt 40 bis 220.

Die Komponente a1) kann auch hydrophile Polyole umfassen mit einem oder zwei gegen Isocyanate reaktionsfähigen Wasserstoffatomen, die in der Seitenkette Ethylenoxid aufweisende Polyetherketten tragen oder Gemische davon. Diese bewirken eine bessere Dispergierung der Polyurethane in der Wasserphase.

Außerdem oder zusätzlich können Polyesterpolyole als Komponente a1) verwendet werden. Man kann die Polyesterpolyole beispielsweise durch Veresterung von organischen Dicarbonsäuren oder ihren Anhydriden mit organischen Polyolen herstellen. Die Dicarbonsäuren und die Polyole können aliphatische oder aromatische Dicarbonsäuren und Polyole sein.

Die zur Herstellung der Polyesterpolyole verwendeten Polyole sind z.B. Diole wie Alkylenglykole, beispielsweise Ethylenglykol, Butylenglykol, Neopentylglykol und andere Glykole wie Dimethylolcyclohexan. Daneben können auch geringe Mengen an höherfunktionellen oder Gemische aus höher- und monofunktionellen OH-Komponenten wie z.B. Trimethylolpropan, Pentaerythrit, Glycerin, Hexantriol; Polyether, die Kondensate von Glykolen mit Alkylenoxiden sind; Monoether solcher Glykole, wie Diethylenglykolmonoethylether, Tripropylenglykolmonomethylether eingesetzt werden.

Die Säurekomponente des Polyesterpolyols besteht bevorzugt in erster Linie aus niedermolekularen Dicarbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Sebazinsäure, Fumarsäure, Maleinsäure, Glutarsäure, Bernsteinsäure oder Itaconsäure. Anstelle dieser Säuren können auch ihre Anhydride, soweit diese existieren, verwendet werden. Es ist auch möglich, um verzweigte Polyester zu erhalten, Anteile an trifunktionellen Carbonsäuren zuzusetzen, wie Trimellithsäure, Apfelsäure, Aconitsäure, Bishydroxyethyltaurin, sowie Dimethylolpropionsäure.

Die Polyesterpolyole besitzen vorzugsweise ein Molekulargewicht von 400 bis 6000, eine OH-Zahl von 20 bis 280 und eine Säurezahl von kleiner 3. Bevorzugt werden lineare Polyesterpolyole eingesetzt.

Ferner lassen sich bei der Erfindung auch Polyesterpolyole, bevorzugt Diole, die sich von Lactonen ableiten, als Komponente a1) benutzen. Diese Produkte erhält man beispielsweise durch die Umsetzung eines epsilon-Caprolactons mit einem Diol. Solche Produkte sind z.B. in der US-A-3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus.

Diese wiederkehrenden Molekülanteile können beispielsweise der allgemeinen Formel 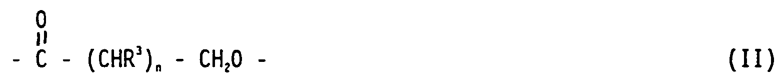 entsprechen, in der n bevorzugt 4 bis 6 ist und der Substituent R³ Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton z.B. 6 bis 8 Kohlenstoffatome enthalten kann und wobei bevorzugt mindestens 2 Wasserstoffsubstituenten an dem Kohlenstoffatom vorhanden sind, das an die Sauerstoffgruppe des Rings gebunden ist. Das als Ausgangsmaterial verwendete Lacton kann durch die folgende allgemeine Formel III dargestellt werden: 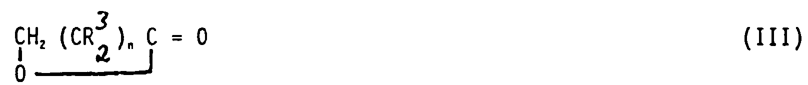 in der n und R³ die bereits angegebene Bedeutung haben.

Die bei der Erfindung für die Herstellung der Polyesterdiole bevorzugten Lactone sind die epsilon-Caprolactone, bei denen n den Wert 4 hat. Das am meisten bevorzugte Lacton ist das unsubstituierte epsilon-Caprolacton, bei dem n den Wert 4 hat und alle R³-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele für die Umsetzung mit dem Lacton geeigneten aliphatischen Diolen schließen Ethylenglykol, 1,3-Propandiol, 1,4-Butandiol, Dimethylolcyclohexan ein.

Es können auch sequenzierte Polydiole aus Polyethern und Polyestern verwendet werden.

Die Diole a1) sind bevorzugt im wesentlichen frei von Carboxylgruppen, d.h. es sind nur geringe Anteile von nicht umgesetzten COOH-Gruppen vorhanden. Die Säurezahl liegt bevorzugt unter 10 mg KOH/g, im allgemeinen unter 5. Diese geringen Anteile an gegebenenfalls ionischen Gruppen bzw. in ionische Gruppen überführbaren Gruppen ergeben keinen Beitrag zur Stabilisierung der wäßrigen Dispersionen.

Es können auch Mischungen verschiedener Diole a1) eingesetzt werden.

Bei den gegebenenfalls mitverwendbaren niedermolekularen Verbindungen a2) handelt es sich beispielsweise um niedermolekulare Alkohole. Es sind die aus der Polyurethanchemie an sich bekannten im Sinne einer Isocyanat-Additionsreaktion mindestens difunktionellen Hydroxylgruppen aufweisenden Verbindungen eines unter 400 liegenden Molekulargewichts. Als Verbindung kommen sowohl im Sinn der Isocyanat-Additionsreaktion difunktionelle Verbindungen als auch mindestens trifunktionelle Verbindungen bzw. beliebige Gemische derartiger Verbindungen in Betracht. Insbesondere ist es bevorzugt Diole bei der Umsetzung einzusetzen.

Beispiele für solche Komponenten sind niedermolekulare mehrwertige Alkohole, z.B. aliphatische Alkohole, wie Ethylenglykol, Propandiol-1,2 und -1,3, Butandiol-1,4 und -1,3, Hexandiol-1,6- Octandiol-1,8, Neopentylglykol, 1,4-Bishydroxymethylcyclohexan, 2-Methyl-1,3-propandiol, 2,2,4-Trimethylpentandiol-1,3, Trimethylolethan, isomere Hexantriole oder Pentaerythrit oder Gemische davon. Solche Polyolverbindungen weisen insbesondere ein Molekulargewicht unter 400 auf.

Die Menge der niedermolekularen Verbindungen a2) kann bis zu 30 Gew.-% bezogen auf a) betragen. Über die Menge von höherfunktionellen Polyolen kann der Verzweigungsgrad kontrolliert werden. Es ist jedoch darauf zu achten, daß Vernetzungen weitgehend vermieden werden.

Erfindungsgemäß werden als Komponente b) NCO-terminierte Verbindungen eingesetzt, die durch Umsetzung von Verbindungen b1) entstehen, die zwei mit Isocyanatgruppen reagierende Gruppen tragen und mindestens eine anionische oder zur Anionenbildung befähigte Gruppe tragen mit aliphatischen, cycloaliphatischen oder aromatischen Diisocyanaten b2). Es handelt sich im wesentlichen um niedermolekulare Verbindungen. Dabei beträgt das molare Verhältnis der nicht-ionischen reaktiven Gruppen zu den Isocyanatgruppen von 1 : 1,5 bis 1 : 2,5. Bevorzugt beträgt das Verhältnis ungefähr 1 : 2. Diese Verbindungen sind dann auch in organischen Lösungsmitteln gut lösbar. Die Umsetzung erfolgt bevorzugt in flüssiger Form, d.h. es können gegebenenfalls Anteile organischer nicht reaktiver Lösungsmittel enthalten sein. Gegebenenfalls kann die Temperatur zur besseren Umsetzung etwas erhöht werden.

Komponente b) kann als separate Komponente zugesetzt werden. Es ist jedoch auch möglich, b) in situ, in Gegenwart von a), aus der Mischung zu erzeugen und weiter umzusetzen.

Geeignete mit Isocyanatgruppen reagierende Gruppen sind insbesondere nicht-ionische Gruppen wie Hydroxylgruppen, Thiolgruppen und primäre und sekundäre Aminogruppen. Als wenig reaktive saure zur Anionenbildung befähigte Gruppen kommen z.B. Carboxyl-, Phosphonsäure- und Sulfonsäuregruppen in Betracht. Als Verbindungen, die mindestens zwei mit Isocyanatgruppen reagierende Gruppen und mindestens eine zur Anionenbildung befähigte Gruppe enthalten sind z.B. Dihydroxysäuren und Diaminosäuren geeignet. Dihydroxysäuren sind beispielsweise aliphatische und aromatische Dihydroxycarbonsäuren, wie Dihydroxypropionsäure, Dimethylolpropionsäure, Dimethylolessigsäure, Dimethylolbuttersäure, Dihydroxybernsteinsäure oder Dihydroxybenzoesäure geeignet. Geeignet sind auch die durch Oxidation von Monosacchariden zugänglichen Polyhydroxysäuren, z.B. Glukonsäure, Zuckersäure, Schleimsäure, Glucuronsäure und dergleichen. Aminogruppenhaltige Verbindungen sind beispielsweise Diaminocarbonsäuren, wie alpha,delta-Diamino-valeriansäure, 3,4-Diaminobenzoesäure, 2,4-Diamino-toloul-sulfon-säure-(5) und 4,4-Diamino-di-phenylethersulfonsäure. Phosphorsäuregruppenhaltige Verbindungen sind z.B. 2,2-Dimethylolpropanphosphonsäure oder Diethanolaminmethanphosphonsäure. Zur Herstellung eines anionischen Urethanprepolymers sind die Dihydroxycarbonsäuren bevorzugt, besonders bevorzugt wird die Verwendung von Dimethylolpropionsäure.

Als Komponente b2) können zur Umsetzung beliebige organische Diisocyanate oder ihre Gemische eingesetzt werden. Es können z.B. aliphatische oder aromatische, auch sterisch gehinderte Isocyanate oder oligomerisierte Isocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylenthylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 2,4-Toluylendiisocyanat, 2,6-Toluylen-diisocyanat, 1-Isocyanatomethyl-5-isocyanato-1,3,3-trimethylcyclohexan, Bis-(4-isocyanatocyclohexyl)methan, Bis-(4-isocyanatophenyl)-methan, 4,4-Diisocyanato-diphenylether, 1,5-Dibutylpentamethylendiisocyanat, Tetramethylxylylendiisocyanat und 2,3-Bis-(8-isocyanato-octyl)-4-octyl-5-hexylcyclohexan.

Es wird soviel Umsetzungsprodukt b) zu der Mischung gegeben, daß das entstehende Polyesterurethan eine Säurezahl von 5 - 50 aufweist, bevorzugt zwischen 15 - 40. Phosphon- und Sulfonsäuren werden in entsprechenden Mengen eingesetzt.

Die Komponente b) wird hier beispielsweise in einer Menge von etwa 0,5 bis 7 Gew.-%, vorzugsweise etwa 0,8 bis etwa 4,0 Gew.-% (berechnet als Carboxylgruppe), bezogen auf das herzustellende Urethanprepolymer, verwendet. Wenn die Carboxylgruppenmenge unter etwa 0,5 % liegt, ist es schwierig, eine stabile Emulsion herzustellen. Wenn dagegen die Menge 7 Gew.-% übersteigt, verstärkt sich die hydrophile Eigenschaft, was die Emulsion hochviskos macht und die Wasserbeständigkeit der Beschichtung verringert.

Die Stabilisierung der wäßrigen Dispersion erfolgt durch ionische Gruppen. Es können auch ionische und nicht-ionische Gruppen gemeinsam eingesetzt werden. Bevorzugt ist eine Stabilisierung allein durch anionische Gruppen.

Als Komponente c) können für die Herstellung der Polyurethandispersionen beliebige organische Polyisocyanate, insbesondere Diisocyanate gegebenenfalls auch als Gemisch eingesetzt werden. Es handelt sich beispielsweise um die unter b2) erwähnten Diisocyanate bzw. oligomere Isocyanate. Bevorzugt eingesetzt werden nicht vergilbende oder sterisch gehinderte Isocyanate mit 4 bis 25, vorzugsweise 6 - 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen enthalten. Das Grundgerüst kann z.B. aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, 4,4'-Diphenylpropan-diisocyanat, Xylylendiisocyanat, 1,1,6,6-Tetramethylhexamethylendiisocyanat, p- und m-Tetramethylxylylendiisocyanat und die entsprechenden hydrierten Homologen.

Ebenfalls ist es möglich, zur Umsetzung Polyisocyanate einzusetzen, bei denen der 2 übersteigende Teil an Isocyanatgruppen irreversibel defunktionalisiert worden ist. Als Verbindungen zur Defunktionalisierung kommen beispielsweise niedermolekulare, primäre oder sekundäre Amine oder Alkohole in Betracht.

Die Mengen an a), b) und c) bzw. an a1), a2), b1) und b2) werden so gewählt, daß bei der Umsetzung ein Umsetzungsprodukt mit endständigen OH-Gruppen entsteht, d.h. es wird mit einem Polyolüberschuß gearbeitet. Man kann mit einem OH zu NCO-Verhältnis von 1,01 bis 3 : 1 arbeiten, bevorzugt ist der Bereich 1,05 bis 2 : 1, besonders bevorzugt von 1,1 bis 1,5 : 1. Das Umsetzungsprodukt kann verzweigt aufgebaut sein, bevorzugt wird ein linearer Aufbau. Die Umsetzungsprodukte weisen ein Zahlenmittel der Molmasse (Mn) von 5000 bis 50000, bevorzugt über 8000 und unter 30000 und eine OH-Zahl von 5 bis 75, bevorzugt über 10 und unter 50 auf. Die Reaktion kann in einer Mischung aller Komponenten erfolgen oder die Reaktion erfolgt stufenweise.

Die Reaktion kann lösemittelfrei erfolgen oder sie kann aber auch in, dem Fachmann geläufigen, für die Polyurethansynthese geeigneten, Lösemitteln durchgeführt werden. Die Lösemittel können im Ansatz verbleiben oder gegebenenfalls im Vakuum vor der weiteren Verarbeitung abdestilliert werden. Ebenso können weitere zusätzliche Lösemittel zugesetzt werden, um die Viskosität der Polymerlösung zu erniedrigen.

Als Lösemittel sind solche geeignet, die bei der Umsetzung der Isocyanate nicht stören. Es handelt sich beispielsweise um aromatische Kohlenwasserstoffe, wie Benzol, Toloul, Xylol, Ester, wie Ethylacetat, Butylacetat, Methylglykolacetat, Ethylglykolacetat, Methoxypropylacetat, Ether, wie Tetrahydrofuran, Dioxan, vollveretherte Mono- oder Diglykole von Ethylenglykol oder Propylenglykol, wie Diethylenglykol oder Dipropylenglykoldimethylether, Ketone wie Aceton, Methylethylketon, halogenhaltige Lösemittel wie Methylenchlorid oder Trichlormonoflourethan. Bevorzugt werden Lösemittel, die eine Dispergierung in der Wasserphase erleichtern. Ebenfalls bevorzugt werden Lösemittel, die später in den erfindungsgemäßen Überzugsmitteln keine negativen Eigenschaften aufweisen.

Das OH-funktionalisierte Polyurethan-Prepolymer wird als Zwischenprodukt durch Umsetzung mit weiteren Polyisocyanaten d) kettenverlängert. Diese werden beispielsweise homogen mit dem funktionalisierten Zwischenprodukt gemischt und dann gegebenenfalls durch Erwärmen oder mit in der NCO-Chemie üblichen Katalysatoren, z.B. Dibutylzinndilaurat (DBTL), Aminderivate, unterstützt, zur Reaktion gebracht. Das kann vor oder nach der Salzbildung der in anionische Gruppen überführbaren Gruppen in der organischen oder wäßrigen Phase geschehen, bevorzugt findet die Reaktion nach Neutralisation in der organischen Phase statt.

Als Polyisocyanate sind beispielsweise lackübliche bekannte Poly- oder Diisocyanate geeignet, wie sie auch vorstehend für die Komponenten b2) und c) beschrieben worden sind. Sie können auf aliphatischer, cycloaliphatischer oder aromatischer Basis sein. Sie weisen bevorzugt eine Molmasse von unter 1200 auf.

Als Polyisocyanate d) sind ebenfalls niedermolekulare NCO-terminierte Prepolymere geeignet. Diese sind bevorzugt difunktionell. Ihr Molekulargewicht liegt bevorzugt unter 1000.

Vor oder nach der Kettenverlängerung werden die in anionische Gruppen überführbaren Gruppen neutralisiert. Hierzu werden Basen eingesetzt, z.B. Ammoniak oder Amine. Geeignete Amine sind primäre, sekundäre oder tertiäre Amine, z.B. Trialkylamine, wie Trimethylamin, Triethylamin, Triisopropylamin, Tri-n-propylamin und Tri-n-butylamin; N-Alkylmorpholine, wie N-Methylmorpholine und N-Ethylmorpholin; N-Dialkylalkanolamine, wie N-Dimethylethanolamin und N-Diethylenethanolamin; Dialkylamin wie Diethylamin, Dibutylamin, Diisopropylamin; Alkylamine wie Ectylamin, Hexylamin, Isopropylamin, Aminoethanol; Mischungen aus mindestens zwei dieser Verbindungen. Es werden im allgemeinen zwischen 30 % und 100 % der sauren Gruppen in Salzgruppen überführt.

Das Herstellen der wäßrigen Dispersion kann in üblicher Weise nach bekannten Verfahren erfolgen.

Die Polyurethandispersion B) weist eine Säurezahl von 5 bis 50 (bezogen auf den Festkörper), bevorzugt von 15 bis 35, besonders bevorzugt von 15 - 25 auf. Der Festkörper beträgt beispielsweise 25 bis 55 Gew.-%. Das Mn der Bindemittel beträgt 10000 bis 300000, bevorzugt 50000 bis 200000, besonders bevorzugt 40000 bis 100000. Sie können gegebenenfalls noch weitere funktionelle Gruppen, wie z.B. OH-Gruppen, aufweisen. Die entstehenden Dispersionen haben beispielsweise eine mittlere Teilchengröße zwischen 10 und 1000 nm, bevorzugt 30 bis 500, besonders bevorzugt 30 bis 150 nm.

Die erfindungsgemäßen Überzugsmittel enthalten 8 bis 20 Gew.-%, bezogen auf das gesamte Überzugsmittel, des die Komponente A) und B) enthaltenden Bindemittels.

Der Wasseranteil der erfindungsgemäßen Überzugsmittel beträgt 50 bis 90 Gew.-%, bevorzugt 60 bis 85 Gew.-%. Zur Verbesserung der Rheologie der Filmbildung und des Metalliceffektes, können bis zu 20 Gew.-%, z.B. 1 bis 20 Gew.-%, bevorzugt 6 bis 15 Gew.-%, jeweils bezogen auf das gesamte Überzugsmittel, eines oder mehrerer Lösemittel enthalten sein.

Als Lösemittel kommen organische Lösemittel in Frage, wie sie beispielsweise auf dem Lacksektor als Lacklösemittel und/oder Zusätze zu wäßrigen Überzugsmitteln üblich sind.

Geeignet sind beispielsweise aromatische Lösemittel, wie Xylol, Ester, wie Butylacetat, Glykolether, wie Ethylenglykolmonobutylether (Butylglykol), Alkohole, wie Butanol, aliphatische Kohlenwasserstoffe, wie z.B. Testbenzin.

Die erfindungsgemäßen Überzugsmittel sind besonders geeignet zur Herstellung von Effekt- und perlmutt- oder unifarbenen Basislackschichten.

Beim Einsatz von Metallicpigmenten werden bevorzugt 0,3 bis 4 Gew.-% eines oder mehrerer Metallic-Pigmente, bezogen auf das gesamte Überzugsmittel, verwendet. Als Metallic-Pigmente kommen übliche Metallplättchen bzw. Metallschuppenpigmente in Frage, wie Metallbronzen, beispielsweise Aluminiumpigmente, wie Aluminiumbronzen.

Es können auch weitere Effektpigmente, z.B. Interferenzpigmente wie titandioxidbeschichteter oder eisenoxidbeschichteter Glimmer, beschichtete Aluminium- oder Graphitpigmente eingesetzt werden.

Neben den Effektpigmenten können auch weitere farbgebende Pigmente im Überzugsmittel enthalten sein. Zur Herstellung unifarbener Lackschichten sind ausschließlich farbgebende Pigmente enthalten. Zu den Pigmenten sollen auch übliche anorganische oder organische Füllstoffe zählen, wie sie dem Fachmann auf dem Lackgebiet geläufig sind.

Beispiele für anorganische oder organische Farbpigmente oder Füllstoffe sind Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Diketo-pyrrolopyrrolpigmente.

Die erfindungsgemäßen Überzugsmittel enthalten Neutralisationsmittel zur zumindest teilweisen Neutralisation von neutralisierbaren Gruppen. Der Neutralisationsgrad neutralisierbarer Gruppen beträgt bevorzugt 40 bis 120 % der neutralisierbaren Gruppen und liegt bevorzugt unter 100 %.

Als Neutralisationsmittel für saure Gruppen kommen auf dem Lacksektor übliche Basen in Frage, wie die vorstehend angegebenen Amine, Ammoniak oder Alkanolamine, wie N,N-Dimethylethanolamin.

Die erfindungsgemäßen Überzugsmittel enthalten gegebenenfalls übliche Additive und Hilfsstoffe, wie sie auf dem Lacksektor eingesetzt werden. Derartige Hilfsmittel und Additive sind Verdicker, die Rheologie beeinflussende Zusätze, Antischaummittel, Verlaufsmittel, Inhibitoren (z.B. zur Inhibitierung der Gasung von Aluminiumpigmenten), Dispergier- und Netzadditive.

Die Additive und Hilfsstoffe werden in üblichen, dem Fachmann geläufigen Mengen, je nach gewünschtem Effekt, zugesetzt.

Die erfindungsgemäßen Überzugsmittel können auf verschiedene Substrate nach üblichen Beschichtungsverfahren aufgetragen werden, beispielsweise durch Spritzen oder Rakeln. Als Substrate kommen verschiedene Materialien in Frage, wie Metalle, Kunststoffe, jedoch auch Holz, Glas und andere Substrate.

Die erfindungsgemäßen Überzugsmittel sind physikalisch trocknend, d.h. die erfordern kein Einbrennen und können beispielsweise bei Temperaturen in der Größenordnung von 15 bis 60°C getrocknet werden.

Die erfindungsgemäßen Überzugsmittel können nach dem Aufbringen mit Decklacken, insbesondere transparenten Decklacken (Klarlacken) beschichtet werden. Die Beschichtung mit Decklacken kann naß-in-naß, nach kurzem Ablüften oder nach Trocknen der erfindungsgemäß erstellten Basis-Lackschicht erfolgen. Die Trocknung der Decklackschicht kann gemeinsam mit der Lackschicht aus dem erfindungsgemäßen Überzugsmittel durchgeführt werden. Als Decklack kommen übliche, insbesondere transparente Lacke in Frage, wie sie beispielsweise auf dem Kraftfahrzeugsektor üblich sind. Es handelt sich dabei vorwiegend um Lacke auf Lösungsmittelbasis, jedoch können auch Decklacke auf wäßriger Basis verwendet werden.

Die erfindungsgemäßen Überzugsmittel können, wie vorstehend erwähnt, auf verschiedensten Substraten angewendet werden. Sie eignen sich besonders zur Herstellung von Basisschichten in Mehrschicht-Lackaufbauten. Hier kommt als bevorzugtes Anwendungsgebiet die Lackierung von Kraftfahrzeugen bzw. Kraftfahrzeugteilen in Frage. Durch die günstige physikalische Trocknung sind die erfindungsgemäßen Überzugsmittel besonders gut zur Herstellung von Reparaturlackierungen bzw. als Reparaturlack geeignet. Sie sind jedoch auch zur Herstellung von Einbrennlackierungen in der Serienlackierung geeignet.

Im Vergleich zu anderen bekannten wäßrigen Überzugsmitteln, die als Basislack eingesetzt werden, werden mit den erfindungsgemäßen Überzugsmitteln im Mehrschichtaufbau sehr gute Härte des Gesamtaufbaus und hervorragende Wasserfestigkeit erreicht. Die hierdurch erzielten Eigenschaften sind vergleichbar mit denen lösemittelhaltiger Basislacke.

Die folgenden Beispiele sollen die Erfindung erläutern. Teile (Tle) und Prozentangaben beziehen sich auf das Gewicht.

### Herstellungsbeispiel 1

### Polyurethandispersion A

249,8 g eines Polyesters, hergestellt aus Neopentylglykol, Hexandiol-1,6, Isophthal- und Adipinsäure, mit einer Hydroxylzahl von 37 und einer Säurezahl unter 3 werden zusammen mit 24,7 g Dimethylolpropinsäure und 9,3 g Butandiol-1,4 in 150 g Aceton unter Rückfluß gelöst. Anschließend werden 0,1 g 2,6-Di-tert.-butyl-4-methylphenol und 16,6 g Glycerinmonomethacrylat zugegeben und homogenisiert. Nach Zugabe von 134,2 g Tetramethylxylylendiisocyanat wird bei Rückflußtemperatur so lange gerührt, bis der Isocyanatgehalt 1,08 Gew.-%, bezogen auf die Gesamteinwaage, beträgt.

In die so erhaltene Präpolymerlösung werden nun 15,5 g Diethanolamin rasch zugegeben und 30 Minuten homogenisiert. Nach Dosierung von 13,1 g Triethylamin werden 1108 g Wasser mit einer Temperatur von 80°C zu der Polymerlösung unter intensivem Rühren gegeben. Das Lösemittel Aceton wird anschließend durch Vakuumdestillation von der erhaltenen Dispersion abgetrennt. Nach Zugabe von 51,1 g Methylmethacrylat wird die Temperatur auf 80°C erhöht und weitere 30 Minuten gerührt. Anschließend werden 10 Vol-% einer Ammoniumperoxidsulfat-Lösung, bestehend aus 0,8 g ammoniumperoxidsulfat und 50 g Wasser, bei 80°C zugegeben. Die restliche Menge der Ammoniumperoxidsulfat-Lösung wird über einen Zeitraum von 30 Minuten dosiert. Die Temperatur wird für weitere zwei Stunden bei 78 bis 80°C gehalten.

Nach Abkühlen auf Raumtemperatur wird die Dispersion auf einen Festkörpergehalt von 30 % eingestellt und durch ein 5 mm Filter filtriert. Die resultierende Dispersion besitzt einen pH-Wert von 7,46.

### Herstellungsbeispiel 2

### Polymethandispersion B)

582 g eines handelsüblichen Polyesters (Mₙ = 1000, OH-Zahl = 106), 28,7 g Dimethylolpropionsäure (DMPA) und 124 g N-Methylpyrrolidon (NMP) werden gemischt und bei 80°C gelöst. Danach wird auf 50°C abgekühlt. Zu der Mischung werden 139 g Isophorondiisocyanat (IPDI) gegeben, auf 80°C aufgeheizt und 125 g NMP zugegeben. Die Mischung wird bis zum NCO-Wert < 0,1 % umgesetzt.

Zu dem Umsetzungsprodukt werden 33,2 g Dimethylisopropanolaminlösung (50 %ig in Wasser) bei 80°C zugegeben und 10 Minuten untergerührt. Es werden 1174 g vollentsalztes Wasser bei 80°C langsam zugegeben und gut untergemischt. Dabei kann die Temperatur auf 50°C abkühlen. Zu der erhaltenen wäßrigen Dispersion werden 34,5 g IPDI bei 50°C innerhalb 10 Minuten zugemischt und danach auf 80°C erwärmt.

Es entsteht eine feinteilige wäßrige lagerstabile Dispersion.

| | |
|---|---|
| FK | 36,7 % (bestimmt bei 30 min. 150°C Umluftofen) |
| SZ | 17,4 mg KOH/g (Festkörper) |
| MEQ-Amin | 18,4 (Milliäquivalente pro 100 g Festkörper) |
| FK = Festkörpergewicht, SZ = Säurezahl, MEQ = Milliäquivalent | |

### Herstellungsbeispiel 3

### Herstellung von Metallic-Wasserbasislacken

Aus den vorstehend hergestellten Dispersionen A und B werden wäßrige Metallic-Basislacke mit den folgenden Bestandteilen hergestellt:

| | |
|---|---|
| 23,6 | Tle. Dispersion A + 11,8 Tle. Dispersion B) |
| 46,1 * | Tle. Wasser |
| 7,2 | Tle. n-Butanol |
| 4,0 | Tle. Butylglykol |
| 0,5 | Tle. N.-Methylpyrrolidon |
| 0,3 | Tle. eines handelsüblichen Korrosionsinhibitors zur Verhinderung der Aluminium-Gasung |
| 2,1 | Tle. eines handelsüblichen Verdickers |
| 0,2 | Tle. N,N-Dimethylenethanolamin |
| 4,1 | Tle. einer handelsüblichen Aluminium-Paste (60 % Al) |

Die resultierenden Metallic-Basislacke zeigen eine Viskosität von ca. 30 s (DIN-Becher 4 mm Düse, 23°C) und werden zum Erreichen der Spritzviskosität von ca. 20 s mit ca. 10 % Wasser verdünnt. Mit den Dispersionen werden Lackierungen wie folgt durchgeführt:

### Lackierversuche:

Lackieraufbau der bewerteten Bleche:
Blankgeschliffenes Karosserieblech
Praxisübliche 1K-Polyvinylbutyral-Grundierung
Praxisüblicher 2K-PU-Füller
Wasserbasislack
Praxisüblicher 2K-PU-Klarlack, Medium solid-Typ, FK 47 %

Es können jedoch auch wäßrige Haftgrundierungen und Füller verwendet werden.

Applikation und Trocknung der Decklackschicht (Basislack und Klarlack):
Spritzapplikation des Wasserbasislackes
30 min. Vortrocknung bei Raumtemperatur
Spritzapplikation des Klarlackes
10 min. Ablüften bei Raumtemperatur
30 min. Trocknung bei 60°C

Erläuterung:
Tle. = Gewichtsteile
2K = Zwei Komponenten
PU = Polyurethan

### Herstellungsbeispiel 4

### Herstellung von Uni-Wasserbasislacken

Aus den vorstehend hergestellten Dispersionen A) und B) werden wäßrige Uni-Basislacke mit den folgenden Bestandteilen hergestellt:

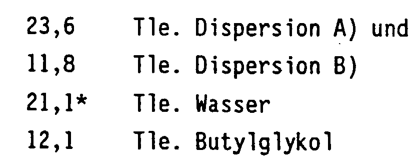

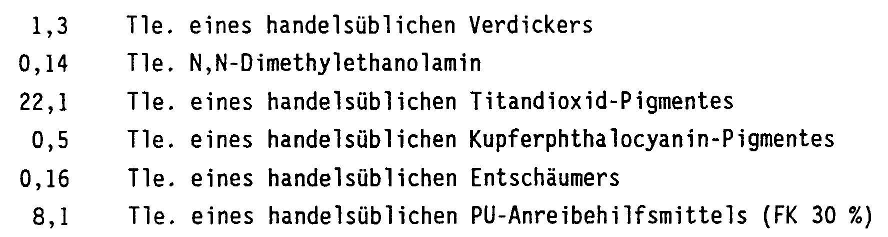

Die resultierenden Uni-Basislacke zeigen eine Viskosität von ca. 40 bis 50 sek. (DIN-Becher 4 mm Düse, 23°C) und werden zum Erreichen der Spritzviskosität von ca. 20 sek. mit ca. 10 bis 15 % Wasser verdünnt.

Mit den Uni-Basislacken werden Lackierungen analog Herstellungsbeispiel 3 durchgeführt.
* jeweils Dispersionen mit ca. 40 % Festkörper (FK); bei niedrigem FK werden die Dispersions- und Wassermengen entsprechend korrigiert, so daß jeweils gebrauchsfertige Überzugsmittel mit dem gleichen FK-Gehalt resultieren.

Zum Vergleich wird im entsprechenden beschriebenen Lackieraufbau ein handelsüblicher lösemittelhaltiger Basislack auf Basis Acrylat/Celluloseacetobutyrat appliziert.

Die Eigenschaften der erhaltenen Lackierungen sind in der folgenden Tabelle dargestellt:

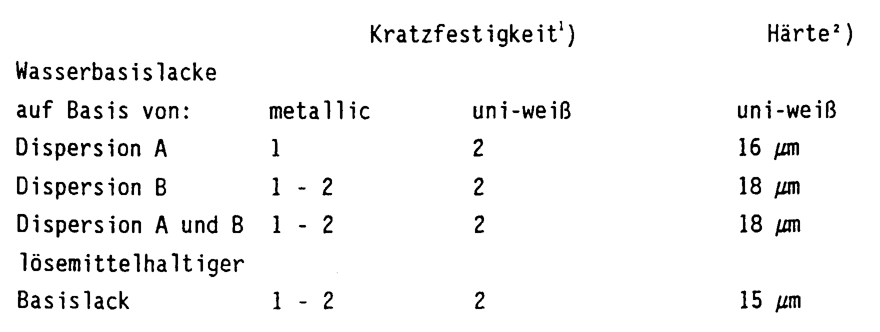

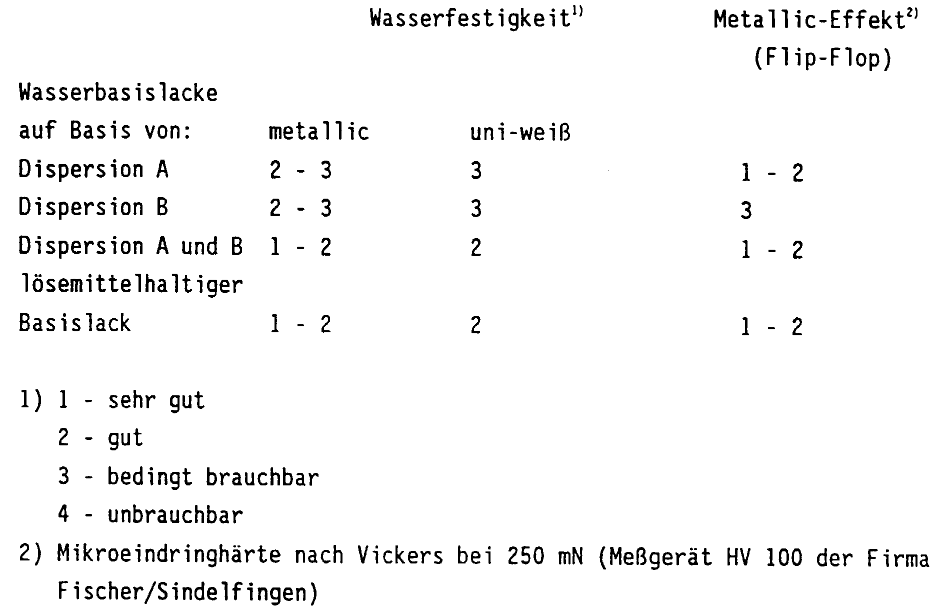

## Patentansprüche

1. Wäßrige Dispersion eines für Überzugsmittel geeigneten Bindemittels, enthaltend ein Gemisch aus:
A) 45 bis 95 Gew.-% eines oder mehrerer Polyurethane, erhältlich durch radikalisch initiierte Polymerisation von Polyurethan-Makromonomeren mit einem Gehalt an Carboxyl-, Phosphon- und/oder Sulfonsäuregruppen und lateralen Vinylgruppen sowie gegebenenfalls terminalen Vinyl-, Hydroxy-, Urethan-, Thiourethan- und/oder Harnstoffgruppen in Gegenwart von einem oder mehreren mit dem Polyurethanmakromonomer copolymerisierbaren ungesättigten Monomeren, in Form einer wäßrigen Dispersion und
B) 5 bis 55 Gew.-% eines oder mehrerer harnstoffgruppenfreier und carbonatgruppenfreier ionische Gruppen enthaltender Polyurethanharze mit einem Zahlenmittel der Molmasse (Mn) von 10000 bis 300000 und einer Säurezahl von 5 bis 50 in Form einer wäßrigen Dispersion, erhältlich durch Bereitung eines OH-Gruppen enthaltenden Polyurethan-Prepolymeren mit einer OH-Zahl von 5 bis 75 und einem Zahlenmittel der Molmasse (Mn) von 5000 bis 50000, durch Umsetzung in organischem Medium von
a) einer oder mehreren mit Isocyanat reaktiven Verbindung mit einer Säurezahl von 0 bis 10, in Form von
a1) 70 bis 100 Gew.-% eines oder mehrerer Polyesterpolyole und/oder Polyetherpolyole, insbesondere Polyesterdiole, Polyetherdiole und/oder Polycarbonatdiole, mit einem Molekulargewicht von 500 bis 6000, zusammen mit
a2) 30 bis 0 Gew.-% einer oder mehrerer von a1) unterschiedlicher Verbindungen mit mindestens zwei mit Isocyanat reaktiven Gruppen, mit einem Molekulargewicht von 60 bis 400, mit
b) einem oder mehreren, freie Isocyanatgruppen enthaltenden Reaktionsprodukten aus
b1) mindestens einer Verbindung mit zwei mit Isocyanaten reaktiven Gruppen und mindestens einer anionischen oder zur Anionenbildung befähigten Gruppe und
b2) einem oder mehreren organischen Diisocyanaten
in einem derartigen Mengenverhältnis, daß das molare Verhältnis der mit Isocyanat reaktiven Gruppen von b1) zu den Isocyanatgruppen von b2) 1 : 1,5 bis 1 : 2,5 beträgt, wobei das Reaktionsprodukt b) in Anwesenheit der Komponente a) hergestellt werden kann, wobei die Komponente b) in einer derartigen Menge eingesetzt wird, daß die fertigen Polyurethanharze die gewünschte Säurezahl aufweisen, sowie mit
c) einem oder mehreren Polyisocyanaten mit mindestens zwei freien Isocyanatgruppen pro Molekül, in einer derartigen Menge, daß das molare Verhältnis der OH-Gruppen der Komponente a) zu den NCO-Gruppen der Komponenten b) und c) 1,01 : 1 bis 3 : 1 beträgt,
worauf das aus a), b) und c) erhaltende Prepolymere vor oder nach der teilweisen oder vollständigen Neutralisation vorhandener in ionische Gruppen überführbarer Gruppen in dem organischen Medium oder nach Überführung in die Wasserphase einer Kettenverlängerung unterzogen wird durch Umsetzung mit
d) einem oder mehreren polyfunktionellen Isocyanaten mit einer Funktionalität an freien NCO-Gruppen von mindestens 1,8, in derartigen Anteilen, daß die fertigen Polyurethanharze das gewünschte Zahlenmittel der Molmasse aufweisen, wobei sich die Gew.-% der Komponenten A) und B) jeweils auf den Harzfestkörper beziehen,

2. Wäßriges Überzugsmittel, enthaltend
- 8 bis 20 Gew.-% einer Dispersion nach Anspruch 1, bezogen auf das Harzfestkörpergewicht,
- 50 bis 90 Gew.-% Wasser,
- 0 bis 20 Gew.-% eines oder mehrerer organischer Lösemittel,
- 0,1 bis 20 Gew.-% eines oder mehrerer Effektpigmente und/oder farbgebender Pigmente, und/oder Füllstoffe,
- Neutralisationsmittel zur Erzielung eines Neutralisationsgrades der neutralisierbaren Gruppen des Bindemittels von 40 - 120 %, sowie gegebenenfalls übliche Additive und Hilfsstoffe.

3. Verfahren zur Herstellung von Mehrschichtlackierungen, durch Auftrag einer Basisschicht aus einem wäßrigen Überzugsmittel auf ein gegebenenfalls vorbehandeltes Substrat und anschließenden Auftrag eines transparenten Decklacks, dadurch gekennzeichnet, daß man als wäßriges Überzugsmittel für die Basisschicht ein Überzugsmittel nach Anspruch 2 verwendet.

4. Verfahren nach Anspruch 3, dadurch gekennzeichnet, daß die wäßrige Basislackschicht bei Temperaturen von 15 bis 60°C getrocknet wird.

5. Verfahren nach Anspruch 3 oder 4, dadurch gekennzeichnet, daß die wäßrige Basislackschicht naß-in-naß mit der transparenten Decklackschicht beschichtet wird, worauf die beiden Lackschichten gemeinsam getrocknet werden.

6. Verwendung der wäßrigen Dispersionen nach Anspruch 1, sowie der wäßrigen Überzugsmittel nach Anspruch 2 bei der Herstellung von Basislackschichten in Mehrschichtlackierungen.

7. Verwendung der wäßrigen Dispersionen nach Anspruch 1, sowie der wäßrigen Überzugsmittel nach Anspruch 2 bei der Lackierung von Kraftfahrzeugen und Kraftfahrzeugteilen.

8. Verwendung der wäßrigen Überzugsmittel nach Anspruch 2 als Reparaturlacke.

## Claims

1. An aqueous dispersion of a binder vehicle suitable for coating media, containing a mixture of :
A) 45 to 95 % by weight of one or more polyurethanes, obtainable by the radical-initiated polymerisation of polyurethane macromonomers with a content of carboxyl, phosphonic and/or sulphonic acid groups and lateral vinyl groups and optionally of terminal vinyl, hydroxy, urethane, thiourethane and/or urea groups, in the presence of one or more unsaturated monomers which are copolymerisable with the polyurethane macromonomer, in the form of an aqueous dispersion, and
B) 5 to 55 % by weight of one or more polyurethane resins which are free from urea groups and carbonate groups and which contain ionic groups, with a number average molecular weight (Mn) of 10,000 to 300,000 and an acid number of 5 to 50, in the form of an aqueous dispersion, obtainable by the preparation of a polyurethane prepolymer, which contains OH groups and which has an OH number of 5 to 75 and a number average molecular weight (Mn) of 500 to 50,000, by the reaction in an organic medium of
a) one or more compounds which react with isocyanate and which have an acid number of 0 to 10, in the form of
a1) 70 to 100 % by weight of one or more polyester polyols and/or polyether polyols, particularly polyester diols, polyether diols and/or polycarbonate diols, with a molecular weight of 500 to 6000, together with
a2) 30 to 0 % by weight of one or more compounds which are different from a1), which contain at least two groups which react with isocyanate, and which have a molecular weight of 60 to 400, with
b) one or more reaction products, which contain free isocyanate groups, of
b1) at least one compound containing two groups which react with isocyanates and at least one anionic group or group capable of forming anions, and
b2) one or more organic diisocyanates
in a quantitative ratio such that the molar ratio of the groups of b1) which react with isocyanate to the isocyanate groups of b2) is 1 : 1.5 to 1 : 2.5, wherein reaction product b) can be prepared in the presence of component a), wherein component b) is used in an amount such that the final polyurethane resins have the desired acid number, and with
c) one or more polyisocyanates containing at least two free isocyanate groups per molecule, in an amount such that the molar ratio of the OH groups of component a) to the NCO groups of components b) and c) is 1.01 : 1 to 3 : 1,
whereupon the prepolymer obtained from a), b) and c) is subjected to chain extension, before or after the partial or complete neutralisation of groups which can be converted into ionic groups and which are present in the organic medium or after conversion into the aqueous phase, by reaction with
d) one or more polyfunctional isocyanates having a free NCO group functionality of at least 1.8, in proportions such that the final polyurethane resins have the desired number average molecular weight, wherein the percentages by weight of components A) and B) are each given with respect to the resin solids.

2. An aqueous coating medium, containing
- 8 to 20 % by weight, with respect to the weight of resin solids, of a dispersion according to claim 1,
- 50 to 90 % by weight water,
- 0 to 20 % by weight of one or more organic solvents,
- 0.1 to 20 % by weight of one or more effect pigments and/or colour-imparting pigments, and/or extenders,
- neutralising agents for obtaining a degree of neutralisation of the neutralisable groups of the binder vehicle of 40 - 120 %, and optionally customary additives and auxiliary materials.

3. A process for producing multi-layer coatings by the application of a base coat comprising an aqueous coating medium to a substrate, which is optionally pretreated, and subsequent application of a transparent covering lacquer, characterised in that a coating medium according to claim 2 is used as the aqueous coating medium for the base coat.

4. A process according to claim 3, characterised in that the aqueous base lacquer coat is dried at temperatures of 15 to 60°C.

5. A process according to claim 3 or 4, characterised in that the aqueous base lacquer coat is coated wet-into-wet with the transparent covering lacquer coat, whereupon the two lacquer coats are dried jointly.

6. The use of the aqueous dispersions according to claim 1, and of the aqueous coating media according to claim 2, for the production of base lacquer coats in multi-layer coatings.

7. The use of the aqueous dispersions according to claim 1, and of the aqueous coating media according to claim 2, for the coating of motor vehicles and vehicle parts.

8. The use of the aqueous coating media according to claim 2 as repair lacquers.

## Revendications

1. Dispersion aqueuse d'un liant approprié à l'utilisation dans des produits de revêtement, cette dispersion contenant un mélange de :
A) 45 à 95 % en poids d'un ou plusieurs polyuréthannes obtenus par polymérisation radicalaire de macromonomères de polyuréthannes contenant des groupes carboxyle, acide phosphonique et/ou acide sulfonique et des groupes latéraux vinyle et le cas échéant des groupes terminaux vinyle, hydroxy, uréthanne, thiouréthanne et/ou urée, en présence d'un ou plusieurs monomères insaturés copolymérisables avec le macromonomère de polyuréthanne, à l'état de dispersion aqueuse et
B) 5 à 55 % en poids d'une ou plusieurs résines de polyuréthannes contenant des groupes ioniques exempte de groupes urée et de groupes carbonate, de masse moléculaire moyenne, moyenne en nombre Mn, 10 000 à 300 000 avec un indice d'acide de 5 à 50, à l'état de dispersion aqueuse qu'on obtient en préparant un prépolymère de polyuréthanne à groupes OH, d'indice d'OH 5 à 75, de masse moléculaire moyenne, moyenne en nombre Mn, de 5 000 à 50 000, par réaction en milieu organique de
a) un ou plusieurs composés réactifs avec les isocyanates, d'indice d'acide 0 à 10, sous forme de
a1) 70 à 100 % en poids d'un ou plusieurs polyesterpolyols et/ou polyétherpolyols, plus spécialement des polyesterdiols, des polyétherdiols et/ou des polycarbonatediols, de poids moléculaire 500 à 6 000, avec
a2) 30 à 0 % en poids d'un ou plusieurs composés autres que ceux mentionnés sous a1), ayant au moins deux groupes réactifs avec les isocyanates, de poids moléculaire de 60 à 400, avec
b) un ou plusieurs produits de réaction contenant des groupes isocyanate libres, de
b1) au moins un composé à deux groupes réactifs avec les isocyanates et au moins un groupe anionique ou un groupe capable de former un anion et
b2 un ou plusieurs diisocyanates organiques,
dans des proportions relatives telles que le rapport molaire entre les groupes réactifs avec les isocyanates de b1) et les groupes isocyanates de b2) se situe entre 1:1,5 et 1:2,5 le produit de réaction b) pouvant être préparé en présence du composant a), le composant b) étant mis en oeuvre en quantité telle que les résines de polyuréthannes finies possèdent l'indice d'acide voulu, ainsi qu'avec
c) un ou plusieurs polyisocyanates à au moins deux groupes isocyanates libres par molécule, en quantité telle que le rapport molaire entre les groupes OH du composant a) et les groupes NCO des composants b) et c) se situe entre 1,01:1 et 3:1,
après quoi le prépolymère obtenu à partir de a), b) et c), avant ou après neutralisation partielle ou totale des groupes convertibles en groupes ioniques dans le milieu organique ou après passage en phase aqueuse, est soumis à un allongement des chaînes par réaction avec
d) un ou plusieurs isocyanates polyfonctionnels dont la fonctionnalité en groupes NCO libres est d'au moins 1,8, en proportions telles que les résines de polyuréthannes finies possèdent la masse moléculaire moyenne, moyenne en nombre, voulue, les pourcentages indiqués pour les composants A) et B) se rapportant aux matières solides résineuses.

2. Produit de revêtement aqueux contenant :
- 8 à 20 % en poids d'une dispersion selon revendication 1, sur le poids des matières solides résineuses,
- 50 à 90 % en poids d'eau,
- 0 à 20 % en poids d'un ou plusieurs solvants organiques,
- 0,1 à 20 % en poids d'un ou plusieurs pigments à effet et/ou pigments colorés, et/ou matières de charge,
- des agents neutralisants permettant de neutraliser les groupes neutralisables du liant à un taux de 40 à 120 %, et le cas échéant, des additifs et produits auxiliaires usuels.

3. Procédé pour l'application de revêtements à plusieurs couches par application d'une couche de base d'un produit de revêtement aqueux sur un substrat éventuellement traité au préalable et application subséquente d'un vernis de couverture transparent, caractérisé en ce que l'on utilise en tant que produit de revêtement aqueux pour la couche de base un produit de revêtement selon revendication 2.

4. Procédé selon revendication 3, caractérisé en ce que la couche de peinture de base aqueuse est séchée à des températures de 15 à 60°C.

5. Procédé selon revendication 3 ou 4, caractérisé en ce que, sur la couche de peinture de base aqueuse, on applique en superposition, au mouillé-sur-mouillé, la couche de vernis de couverture transparente et on sèche les deux couches ensemble.

6. Utilisation des dispersions aqueuses selon revendication 1 et du produit de revêtement aqueux selon revendication 2 pour l'application de couches de peinture de base dans des applications de revêtements à plusieurs couches.

7. Utilisation des dispersions aqueuses selon revendication 1 et des produits de revêtements aqueux selon revendication 2 pour l'application de revêtements sur des véhicules ou des parties de véhicules.

8. Utilisation des produits de revêtement aqueux selon revendication 2 pour l'application de revêtements après réparation.
